# EUROPEAN PATENT SPECIFICATION

(11) **EP 3 339 262 B1**
(45) Date of publication and mention of the grant of the patent: **28.01.2026**
(21) Application number: 17209486.4
(22) Date of filing: 21.12.2017
(51) Int. Cl.: C03C 3/062, C03C 4/02, C03C 10/00

(54) **MATERIAL FOR THE PRODUCTION OF FASHION JEWELLERY AND JEWELLERY STONES WITH HIGH REFRACTIVE INDEX AND HIGH THERMAL RESISTANCE**
MATERIAL ZUR HERSTELLUNG VON MODESCHMUCKSTÜCKEN UND -SCHMUCKSTEINEN MIT HOHEM BRECHUNGSINDEX UND HOHER WÄRMEBESTÄNDIGKEIT
MATÉRIAU POUR LA FABRICATION DE BIJOUX TENDANCE ET DE PIERRES POUR BIJOUX PRÉSENTANT UN INDICE DE RÉFRACTION ÉLEVÉ ET UNE RÉSISTANCE THERMIQUE ÉLEVÉE

(30) Priority: 23.12.2016 CZ 20160830
(43) Date of publication of application: 27.06.2018
(73) Proprietor: PRECIOSA, a.s., 466 01 Jablonec nad Nisou (CZ)
(72) Inventor: Krátký, Rostislav, 463 45 Pencín (CZ); Altsmíd, Jakub, 464 01 Frýdlant (CZ)
(74) Representative: Hak, Roman

(56) References cited:
- WO-A1-2008/141188
- US-A1- 2004 152 034

## Description

### Field of the Invention

The present invention relates to a new material for the production of synthetic stones in fashion jewellery and jewellery industry. Invented material is an aluminium-silicate glass or glass-ceramics containing rare-earth elements oxides RE₂O₃ and other dopants. The refractive index of the invented material is higher than 1.65, the optical dispersion is higher than 0.012, density higher than 3.3 g.cm⁻³ and the Young's elastic modulus higher than 110 GPa. The material does not contain compounds of lead, cadmium, arsenic, and thanks to suitable additives, it can be prepared in a wide range of colours. Prepared glass may be crystallised by further heat treatment to obtain glass-ceramic material with better thermal stability and modified optical properties.

### Prior Art

The most frequent material used in production of fashion jewellery stones is glass - see for example the invention WO 2010142256, or the invention CZ 2010-575. Its main advantages are that it can be pre-shaped for further processing right from the melt and a very wide spectrum of colour shades. Main disadvantages of traditionally used glass compositions are a low refractive index, due to which cut stones have to be provided with an additional reflective layer, and its low thermal resistance, due to which it is impossible to process it by the jewellery technique of pouring melting metal - the method of lost wax casting - see the patent US 4,154,282.

Concerning the fashion jewellery industry, the most frequently used material is mono-crystalline zirconium dioxide stabilised by yttrium - cubic zirconia - CZ. Its advantage is a high refractive index, dispersion and thermal stability. On the other hand, its disadvantage is a limited range of available colours and a very low material yield of processing into the final stone, which is caused by an irregular shape of original crystals and impossibility of pre-shaping from the molten state. Apart from that, mono-crystalline synthetic spinel, corundum and some glass-ceramic materials based on lithium, magnesium and zinc aluminium silicates, or their mixtures, such as according to the invention US 20160113363 are used for coloured stones. Aluminium-silicate glass, or glass-ceramics with rare-earth element oxides (RE₂O₃), namely Y₂O₃, are used in optics due to their high refractive index, mechanical, chemical and thermal resistance. The patent US 4,530,909 discloses aluminium-silicate glass, and a process of its preparation, of the following composition: 30-60 mol. % SiO₂, 20-35 mol. % Al₂O₃, 10-30 mol. % of RE₂O₃, namely Y₂O₃, and up to 8 mol. % ZrO₂. The resulting glass is brownish due to the mixture of rare earth elements. The patent JP 04-119941 discloses the preparation of crystallised glass with high hardness and thermal resistance. The glass contains 5-50 wt. % SiO₂, 5-70 wt. % Al₂O₃, 10-70 wt. % Y₂O₃ with the addition of 0.1-30 wt. % of any of the oxides MgO, TiO₂, ZrO₂ and La₂O₃, or their mixtures used as the nucleation agent. Crystallisation of molten glass was performed at temperatures between 900-1250 °C for a period of time of less than 100 hours. The main crystalline phases are Al₂O₃ and Y₃Al₅O₁₂. The material does not require transparency. The patent US 6,482,758 claims glass of the RE₂O₃ - Al₂O₃ - SiO₂ system which is suitable for application in optics as a laser or optical amplifier material. The composition of the glass is 1-50 mol. % RE₂O₃, 0-71 mol. % Al₂O₃, 0-35 mol. % SiO₂ and 0-15 mol. % of other oxides. The content of RE₂O₃ with Al₂O₃ is at least 55 mol. %. The patent US 20040233514 discloses fluorescent aluminium-silicate glass useable for preparation of optical communication components (waveguides, amplifiers). The composition of the glass is 15 - 50 mol. % Al₂O₃, 0-80 mol. % SiO₂, in total 5-85 mol. % of the oxides B₂O₃, Ga₂O₃, Y₂O₃, Ta₂O₅, Sb₂O₃, Nd₂O₅, La₂O₃ a Yb₂O₃ and Er³⁺ ions in an amount of at least 2000 ppm by weight. The patent US 7,799,444 discloses glass / glass-ceramic material applicable in optics namely due to its scintillation properties. The glass is melted in a platinum beaker at temperatures up to 1600 °C and then crystallised at temperatures of 850-1150 °C. The size of crystals is 20-1000 nm. The composition of glass is 5-50 wt. % SiO₂, 5-50 wt. % Al₂O₃, 10-80 wt. % Y₂O₃, 0-20 wt. % B₂O₃ and 0.1-30 wt. % RE₂O₃. SrO, BaO, CaO, P₂O₅, Ga₂O₃, Na₂O, K₂O, Li₂O, TiO₂, ZrO₂ or Ta₂O₅ may be used as additives. Aluminium-silicate glass / glass-ceramic with rare-earth element oxides content could, due to their mechanical, thermal and optical properties, be used in jewellery industry.

The international patent application published under No. WO 2008/141188 provides a method for making an article from boro-silicate glass.

Above mentioned patents do not deal with the possibility of intentional modification of the composition with the aim to imitate the appearance and properties of natural gemstones. None of the materials from the cited patents is optimised for high optical dispersion which is (contrary to the field of optics) desirable in fashion jewellery and jewellery industries.

### Summary of the Invention

The subject-matter of the invention is a material usable for manufacture of fashion jewellery stones - aluminium-silicate glass with the addition of rare-earth elements oxides and having the refractive index at least 1.65, the dispersion higher than 0.012, with high mechanical hardness and very good thermal resistance, not containing compounds of lead, cadmium, arsenic, and securing maximum health safety, in accordance with claim 1.

This glass can be coloured by means of addition of different oxides in order to imitate well the colours and appearance of natural gemstones. The glass may be crystallised by further heat treatment in order to obtain glass-ceramic material, thus achieving better mechanical, thermal and optical properties. A disclosure relates to the material for fashion jewellery stone which comprises (in wt. %)
0 - 30 % SiO₂,
10 - 50 % Al₂O₃,
20 - 70 % Y₂O₃ + La₂O₃,
0.1 - 20 % of dopants improving optical-aesthetic, chemical and mechanical properties, in the form of Nb₂O₅, ZrO₂ and TiO₂, SrO, BaO, and
0 - 20 % of colouring additives in the form of Fe₂O₃, CoO, Pr₂O₃, CeO₂, NiO, CuO, Nd₂O₃, Er₂O₃, SnO₂, ZnO, Cr₂O₃, MnO₂, AgO and Au.

The subject-matter of the invention is thus the composition of glass / glass-ceramic with high refractive index, high optical dispersion and high thermal and mechanical resistance.

The parameters of the glass according to the invention are mentioned in table 1.

**Table 1. Selected properties of the new material for fashion jewellery stones**

| **Name of the parameter** | **Unit** | **Value** |
|---|---|---|
| Refractive index | | ≥ 1.65 |
| Optical dispersion | | ≥ 0.012 |
| Density | [g.cm⁻³] | ≥ 3.3 |
| Young's elastic modulus | [GPa] | ≥ 110 |
| Hardness according to Vickers | | ≥ 900 |
| Melting temperature | [°C] | ≥ 1550 |
| Glass transition temperature | [°C] | ≥ 890 |

Glass was prepared by careful homogenisation of initial materials and by melting in a SiO₂ crucible at temperatures between 1500°C a 1700°C. The molten glass was homogenised by means of a Pt stirrer and subsequently cast into a pre-heated mould and placed in a cooling furnace where it, using a suitable program (the setting according to DSC analysis - see Fig. 1), got rid of internal tension and cooled down to room temperature. Such treated material can be processed by cutting, grinding and polishing into the desired shape of the fashion jewellery or jewellery stone.

Glass-ceramic materials are understood as materials comprising glass and crystalline phase, prepared by subsequent heat treatment of molten glass at temperatures higher than Tg (the selection of crystallization temperatures again according to the DSC analysis - see Fig. 1). By selection of crystallization temperature (Tc), heating speed and the hold time at the temperature, the course of crystallization may be controlled with respect to the size and amount of the crystalline phase. In order to maintain the transparency of the material, it is necessary that the size of crystalline particles does not exceed approximately 50 nm. If the size of crystallites does exceed this value, an opalescence of the material and subsequent complete loss of transparency occurs. The possible crystalline phases in the present system include: Y₃Al₅O₁₂, Y₂Si₂O₇, Y₂SiO₅, La₂Si₂O₇ and ZrTiO₄.

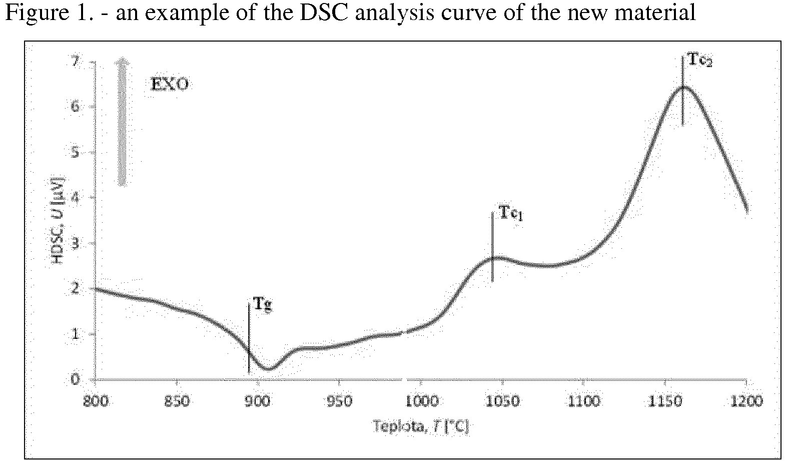

The basis of the new material is aluminium-silicate glass with the content of Y₂O₃ a La₂O₃, which is toxically and ecologically safe. This basis has suitable mechanical properties - hardness higher than 6.5 according to the Mohs scale (≥ 900 according to Vickers), which ensures good resistance against damage by dust particles, and it is also very well processable by standard grinding tools. The basis also has convenient thermal properties, which allow cut stones to be processed by the method of lost wax casting. For the purpose of use of the material in fashion jewellery and jewellery industry, the optical properties of the basic material have to be improved; in particular it is necessary to increase the refractive index and mainly the dispersion which is undesirable in optical material applications. In order to increase the refractive index and optical dispersion, the basic composition of the material must be modified by suitable dopants. For these purposes, oxides TiO₂ and ZrO₂ are most often used. In addition they act as nucleation agents for the controlled crystallization and they also improve the mechanical properties of the material. TiO₂ can be used to increase the refractive index only to a certain extent. Its essential disadvantage is that at higher concentrations it adversely affects the colour of the material - it colours it to brown. In the present invention this problem was solved by the addition of Nb₂O₅. This addition had not been used in any of the cited patents due to its impact on optical dispersion which is substantially increased. This effect, contrary to the use of the material in optics, is desirable in the use in jewellery or fashion jewellery. For example, an addition of 10.5 wt. % in total of Nb₂O₅, ZrO₂ a TiO₂ caused the increase of the dispersion to the value of 0.019 and the value of the refractive index by 0.05.

The modified basic composition with a sufficient refractive index and dispersion may be coloured into shades of colours imitating the colours of natural gemstones, such as sapphires, amethysts, emeralds, rubies etc., by adding one or more components from the group of oxides Fe₂O₃, CoO, Pr₂O₃, CeO₂, NiO, CuO, Nd₂O₃, Er₂O₃, SnO₂, ZnO, Cr₂O₃, MnO₂, AgO and/or Au in an amount of 0 - 20 wt. %. The glass / glass-ceramic according to the present invention contains a certain minimum amount of MgO which is introduced into it as an impurity from initial materials used, namely from the SiO₂. The glass / glass-ceramics according to the present invention contains a certain minimum amount of Fe₂O₃ which is introduced into it as an impurity from input materials. In some cases Fe₂O₃ is added into the material intentionally in order to colour the resulting material.

### Examples of Embodiments of the Invention

The examples of embodiments of the invention, together with selected parameters of glass / glass-ceramic are mentioned in Table 2. The composition according to example 1 describes glass which is colourless, transparent, having refractive index of 1.71 and dispersion of 0.019. The compositions according to examples 2 and 3 describe transparent coloured glass - green, imitating the colour of the peridot, and blue imitating the colour of the sapphire, with the refractive index within the range from 1.66 and 1.67 and dispersion between 0.014 and 0.017. All these types of glass have high thermal resistance (stability of colour and shape) and they are suitable for processing by the method of lost wax.

**Table 2. Examples of embodiments of the invention and selected parameters**

| **Oxide/Example** | **1** | **2** | **3** |
|---|---|---|---|
| SiO₂ | 21.73 | 34.76 | 24.46 |
| Al₂O₃ | 26.84 | 30.19 | 29.36 |
| Y₂O₃ | 36.18 | 22.69 | 39.14 |
| La₂O₃ | 4.77 | 4.09 | 4.90 |
| Nb₂O₅ | 7.00 | 0.8 | 0.50 |
| ZrO₂ | 2.12 | | 0.22 |
| TiO₂ | f1.37 | | 0.15 |
| Fe₂O₃ | | 0.44 | 0.03 |
| CoO | | | 0.07 |
| Pr₂O₃ | | 7.03 | |
| CeO₂ | | | 0.70 |
| CuO | | | 0.10 |
| Nd₂O₃ | | | 0.05 |
| Er₂O₃ | | | 0.03 |
| ZnO | | | 0.30 |
| SnO₂ | | | |
| NiO | | | |
| Cr₂O₃ | | | |
| MnO₂ | | | |
| AgO | | | |
| Au | | | |

| **Selected parameters** | | | |
|---|---|---|---|
| Refractive index n_{d} | 1.71 | 1.67 | 1.66 |
| Dispersion | 0.019 | 0.017 | 0.014 |
| Colour | colourless | green (peridot) | blue (sapphire) |
| Glass / glass-ceramic | glass / glass-ceramic | glass | glass |
| Tg | 896 | 892 | 894 |

### Industrial applicability

The present glass or glass-ceramic material is not harmful to health, since it does not contain compounds of Pb, Cd or As and it is intended primarily for use as synthetic stone production in fashion jewellery and jewellery industry. Thanks to the good variability of its composition and the optical properties, it imitates very well the colour and optical-aesthetic properties of natural gemstones and precious stones. Thanks to its excellent thermal properties and advantageously its stability of shape and colours, it can be used in production of jewels by the technique of pouring melting metal - the method of lost wax casting. It is obviously possible to use it anywhere else there it would be suitable thanks to its properties.

## Claims

1. Glass material for the production of fashion jewellery and jewellery stones with high refractive index and high thermal resistance **characterised in that** it is formed by the aluminium-silicate glass with the addition of rare-earth element oxides and niobium pentoxide and having the refractive index of at least 1.65, dispersion higher than 0.012, comprising the following constituents in weight percent:
a) 21.73 of SiO₂, 26.84 of Al₂O₃, 36.18 of Y₂O₃, 4.77 of La₂O₃, 7.00 of Nb₂O₅,
with the addition of 2.12 of ZrO₂, and 1.37 of TiO₂, as nucleation agent,
or
b) 34.76 of SiO₂, 30.19 of Al₂O₃, 22.69 of Y₂O₃, 4.09 of La₂O₃, 0.8 of Nb₂O₅,
with the addition of 0.44 of Fe₂O₃ and 7.03 of Pr₂O₃ as colouring additives,
or
c) 24.46 of SiO₂, 29.36 of Al₂O₃, 39.14 of Y₂O₃, 4.90 of La₂O₃, 0.50 of Nb₂O₅,
with the addition of 0.22 of ZrO₂, 0.15 of TiO₂, as nucleation agent, and the following colouring additives: 0.03 of Fe₂O₃,0.07 of CoO, 0.70 of CeO₂, 0.10 of CuO, 0.05 of Nd₂O₃, 0.03 of Er₂O₃, 0.30 of ZnO.

## Patentansprüche

1. Glasmaterial für die Herstellung von Strass- und Schmucksteinen mit hohem Brechungsindex und hoher Wärmebeständigkeit, **dadurch gekennzeichnet, dass** es aus Aluminiumsilikatglas mit Zusatz von Seltenerdoxiden und Niob(V)-oxid gebildet ist, mit einem Brechungsindex von mindestens 1,65, einer Dispersion höher als 0,012, bestehend aus den folgenden Bestandteilen in Gewichtsprozent:
a) 21,73 SiO₂, 26,84 Al₂O₃, 36,18 Y₂O₃, 4,77 La₂O₃, 7,00 Nb₂O₅,
mit Zusatz von 2,12 ZrO₂ und 1,37 TiO₂ als Keimbildner,
oder
b) 34,76 SiO₂, 30,19 Al₂O₃, 22,69 Y₂O₃, 4,09 La₂O₃, 0,8 Nb₂O₅,
mit Zusatz von 0,44 Fe₂O₃ und 7,03 Pr₂O₃ als farbgebende Zusätze,
oder
c) 24,46 SiO₂, 29,36 Al₂O₃, 39,14 Y₂O₃, 4,90 La₂O₃, 0,50 Nb₂O₅,
mit Zusatz von 0,22 ZrO₂, 0,15 TiO₂ als Keimbildner, und folgenden farbgebenden Zusätzen: 0,03 Fe₂O₃, 0,07 CoO, 0,70 CeO₂, 0,10 CuO, 0,05 Nd₂O₃, 0,03 Er₂O₃, 0,30 ZnO.

## Revendications

1. Matériau en verre pour la production de pierres de strass et de pierres de joaillerie, présentant un indice de réfraction élevé et une résistance thermique élevée, **caractérisé en ce qu'**il est constitué de verre aluminosilicate avec addition d'oxydes de terres rares et de pentoxyde de niobium, avec un indice de réfraction d'au moins 1,65, une dispersion supérieure à 0,012, comprenant les composants suivants en pourcentage en poids:
a) 21,73 de SiO₂, 26,84 de Al₂O₃, 36,18 de Y₂O₃, 4,77 de La₂O₃, 7,00 de Nb₂O₅,
avec addition de 2,12 de ZrO₂ et 1,37 de TiO₂ comme agent de nucléation,
ou
b) 34,76 de SiO₂, 30,19 de Al₂O₃, 22,69 de Y₂O₃, 4,09 de La₂O₃, 0,8 de Nb₂O₅,
avec addition de 0,44 Fe₂O₃ et 7,03 Pr₂O₃ comme additifs colorants,
ou
c) 24,46 de SiO₂, 29,36 de Al₂O₃, 39,14 de Y₂O₃, 4,90 de La₂O₃, 0,50 de Nb₂O₅,
avec addition de 0,22 de ZrO₂, 0,15 de TiO₂ comme agent de nucléation, et les additifs colorants suivants: 0,03 de Fe₂O₃, 0,07 de CoO, 0,70 de CeO₂, 0,10 de CuO, 0,05 de Nd₂O₃, 0,03 de Er₂O₃, 0,30 de ZnO.
